Europäisches Patentamt

European Patent Office

Office européen des brevets

(19)

(11) Numéro de publication: **0 066 512**

**A1**

(12) ## DEMANDE DE BREVET EUROPEEN

(21) Numéro de dépôt: **82400955.9**

(22) Date de dépôt: **24.05.82**

(51) Int. Cl.³: **G 11 B 5/09**
**H 04 L 25/49**

(30) Priorité: **02.06.81 FR 8110900**

(43) Date de publication de la demande:
**08.12.82 Bulletin 82/49**

(84) Etats contractants désignés:
**AT BE CH DE GB IT LI LU NL SE**

(71) Demandeur: **THOMSON-CSF**
**173, Boulevard Haussmann**
**F-75379 Paris Cedex 08(FR)**

(72) Inventeur: **Artigalas, Max**
**THOMSON-CSF SCPI 173, bld Haussmann**
**F-75379 Paris Cedex 08(FR)**

(74) Mandataire: **Turlèque, Clotilde et al,**
**THOMSON-CSF SCPI 173, Bld Haussmann**
**F-75379 Paris Cedex 08(FR)**

(54) **Procédé de codage de données binaires, et son application à un système de transfert de signal vidéo numérisé sur bande magnétique.**

(57) L'invention se rapporte à un procédé de codage de modulation de données binaires permettant une détection et une correction des erreurs et une détection de certaines erreurs d'ordre supérieur qui consiste à choisir, pour coder des mots de n bits de période T, des mots de $2(n + p)$ bits de période $\frac{n}{2(n + p)}T$ ayant les caractéristiques suivantes: chaque mot comporte autant de "1" que de "0", chaque mot ne comporte pas de bit isolé sauf éventuellement le premier ou le dernier, un mot de $2(n + p)$ bits et son complément codant le même mot d'origine, et l'un ou l'autre étant choisi pour coder ce mot de façon que la terminaison d'un mot et le début du suivant ne fasse pas apparaître de bit isolé dans le train série; chaque mot du code est à une distance au moins égale à 4 de tous les autres mots du code.

Application, notamment, au transfert de signal vidéo numérisé sur bande magnétique.

EP 0 066 512 A1

1

# PROCEDE DE CODAGE DE DONNEES BINAIRES ET SON APPLICATION A UN SYSTEME DE TRANSFERT DE SIGNAL VIDEO NUMERISE SUR BANDE MAGNETIQUE

L'invention se rapporte à un procédé de codage de données binaires particulièrement applicable au transfert sur bande magnétique de données numériques résultant de la conversion analogique-numérique d'un signal vidéofréquence.

Les problèmes rencontrés pour l'enregistrement sur bande magnétique d'un signal vidéo numérisé se rapprochent de ceux rencontrés pour la transmission de données numériques mais sont aggravés du fait des caractéristiques physiques du canal de transmission constitué par la bande magnétique, ce canal ne permettant pas la transmission de composante continue ou de basses fréquences.

Pour le codage des données binaires constituant le signal vidéo numérisé, plusieurs types de codes sont possibles : le code NRZ, les codes de groupe, le code MILLER et ses dérivés. Aucun de ces codes n'est bien adapté à l'enregistrement sur bande magnétique; le premier pose des problèmes de suppression de composante continue et de récupération d'horloge, les seconds augmentent trop la bande passante à transmettre, les derniers ne permettent pas une détection facile des erreurs, ni l'introduction de mots particuliers, caractéristiques de la synchronisation par exemple.

La demanderesse a décrit dans la demande de brevet européen 0026 699 un procédé de codage de données binaires suivant un code, dit "8/16" dans une réalisation particulière, ayant les caractéristiques suivantes : un mot d'information de n bits de période T ayant une longueur nT est codé en un mot de 2n bits de période $\frac{T}{2}$, c'est-à-dire ayant la même longueur nT, ayant les propriétés suivantes :

- chaque mot comporte n bits "0" et n bits "1" ;

- il n'y a pas de bit "0" ou "1" isolé dans le train binaire résultant du codage ; ceci étant obtenu en imposant d'une part qu'aucun bit "0" ou "1" ne soit isolé dans un mot sauf éventuellement le premier ou le dernier, et d'autre part qu'à chaque mot de n bits soient associés deux mots de 2n bits, l'un étant le complément de l'autre, et le choix entre ces deux mots étant réalisé lors du codage pour que les mots commençant ou se terminant par un bit isolé soient respectivement précédés ou suivis d'un mot commençant par

2

le même bit.

Pour satisfaire ces deux exigences, il est nécessaire de grouper les bits du train binaire d'entrée en mots de $n \gg 8$ bits. Classiquement le signal vidéo numérisé est codé sur 256 niveaux, soit $2^8$, c'est-à-dire en mots de 8 bits. Le code décrit ci-dessus, dans lequel les données binaires sont groupées en mots de 8 bits est donc particulièrement intéressant.

Du fait que tous les mots de 16 bits ne sont pas utilisés, qu'il n'y a pas de bit isolé dans le train binaire et qu'il doit y avoir autant de bits "1" que de bits "0" dans le train binaire, ce procédé de codage permet de détecter et de corriger un certain nombre d'erreurs, en particulier les erreurs simples sur des bits qui deviennent alors isolés, mais sa capacité de détection et de correction des erreurs est insuffisante pour de nombreuses applications dans lesquelles le signal restitué doit être traité par ordinateur, par exemple pour générer des effets spéciaux. En effet dans de tels cas, les techniques de dissimulation des erreurs détectées ne sont pas suffisantes et il faut que le signal vidéo numérisé comporte aussi peu d'erreurs que possible.

Certains procédés mettent en oeuvre des codes correcteurs d'erreurs plus ou moins performants mais qui introduisent généralement une redondance importante caractérisée par le nombre de bits supplémentaires par rapport au nombre de bits avant codage. Ces codes correcteurs d'erreurs sont introduits séparément du codage de modulation du signal numérique.

L'invention a pour objet un procédé de codage, mettant en oeuvre un code dérivé du procédé de codage rappelé ci-dessus et donnant plus particulièrement le code 8/16, qui effectue un codage de modulation introduisant lui-même une bonne protection contre les erreurs isolées au prix d'une faible augmentation du débit final, en vue de la détection et de la correction de la totalité des erreurs simples qui sont celles dont la fréquence est la plus grande lors du transfert sur un canal constitué par une bande magnétique, et de la détection de certaines erreurs d'ordres supérieurs.

Suivant l'invention un procédé de codage de données binaires de période T, applicable à la transmission de signal vidéo numérisé, dans lequel ces données sont groupées en mots de n bits, n entier, est principalement caractérisé en ce qu'il associe à chacun des $2^n$ mots possibles de n bits au moins un mot codé choisi dans un sous-ensemble de $2^n$ mots de $2(n \pm p)$ bits,

p entier, les bits de ces mots ayant une période égale à $\frac{n}{2(n+p)}$ T, et les mots de ce sous-ensemble répondant aux critères suivants :

- chaque mot comporte autant de bits "1" que de bits "0",

- aucun bit "1" ou "0" n'apparaît isolé dans un mot sauf éventuellement le premier et/ou le dernier,

- chacun des mots de ce sous-ensemble est à une distance au moins égale à 4 de tous les autres mots ;

et en ce que, n étant donné, p est le plus petit entier tel que parmi les $2^{2(n+p)}$ mots de $2(n+p)$, un sous-ensemble d'au moins $2^n$ mots répondant aux critères est déterminable.

L'invention a également pour objet l'application de ce procédé de codage à un système de transfert de signal vidéofréquence numérisé sur bande magnétique.

L'invention sera mieux comprise et d'autres caractéristiques apparaîtront à l'aide de la description précise qui suit du procédé de codage, cette description étant donnée à titre d'exemple non limitatif.

Le procédé de codage suivant l'invention associe à un mot de n bits de période T un mot de $2(n+p)$ bits de période $\frac{n}{2(n+p)}$T ayant les caractéristiques suivantes :

Chaque mot comporte autant de bits "0" que de bits "1", soit $(n+p)$ bits "0" et $(n+p)$ bits "1", ce qui permet de ne pas avoir à transmettre de composante continue .

Il n'y a pas de bit isolé dans le train binaire résultant du codage, ceci pouvant être réalisé en suivant les mêmes critères que ceux décrits ci-dessus pour le procédé de codage dit "8/16". Pour cela un sous-ensemble de mots de $2(n+p)$ bits comportant $(n+p)$ bits "0" et $(n+p)$ bits "1", qui ne comportent pas de bit isolé sauf éventuellement le premier et, ou, le dernier, et qui de plus commencent tous par le même bit, soit "0" par exemple est déterminé. Les compléments des mots de ce premier sous-ensemble forment un second sous-ensemble. Un mot de n bits est codé par un mot de $(n+p)$ bits appartenant au premier sous-ensemble ou par son complément pour que deux mots codés consécutifs ne fassent pas apparaître de bit isolé.

Enfin, une autre condition est requise pour le choix des mots du code : chacun des mots d'un sous-ensemble doit différer de chacun des autres mots de ce même sous-ensemble par au moins, quatre bits, c'est-à-dire que la "distance" entre les mots retenus dans chaque sous-ensemble est

au moins égale à 4. Ainsi les erreurs simples qui conduisent à des mots à une distance de 1 du mot initial peuvent être détectées et corrigées, les erreurs doubles ou triples conduisant a des mots à des distances de 2 ou 3 du mot initial, et plus généralement les erreurs d'ordre $4q+1$, $4q+2$, et $4q+3$, pour q variant de zéro à l'infini, sont détectées. Seules certaines erreurs d'ordre $4q+4$ qui redonnent un mot à une distance de 4 du mot initial lorsque ce mot appartient au code, ne peuvent pas être détectées. La probabilité de telles erreurs est très faible. C'est une fonction du nombre de mots du code à une distance minimum de 4, $f(4q+4)$, q variable, et du nombre de mots à une distance de 4 d'un mot donné de $2(n+p)$ bits, soit $C_{2(n+p)}^{4q+4}$.

Le procédé pour établir un tel code peut être le suivant :

Dans un premier temps un mot de $2(n+p)$ bits arbitraire mais comportant autant de bits "1" que de bit "0" et ne comportant pas de bit isolé sauf éventuellement le premier et (ou) le dernier du mot est choisi. Puis, tous les mots commençant par le même premier bit, répondant aux critères précédents et qui de plus sont à une distance au moins égale à 4 du mot initial sont formés. Ces mots, et leurs compléments pourront également être des mots du code, et la même opération est répétée à partir de chacun des mots de cette première série, en éliminant à chaque fois ceux qui ne sont pas à une distance au moins égale à 4 de tous ceux qui ont été précédemment retenus. Ainsi dans l'ensemble des mots de $2(n+p)$ bits est délimité un sous-ensemble qui ne comporte que les mots répondant aux trois criteres précédents. Plusieurs sous-ensembles peuvent être ainsi déterminés en fonction du mot de départ. En effet, un sous-ensemble ayant été déterminé, si on choisit un autre mot de départ à une distance de 2 de l'un des mots du premier code qui n'appartient pas au premier sous-ensemble le résultat obtenu pour le sous-ensemble de mots sera différent.

Si aucune autre condition n'est imposée, le nombre N des combinaisons formant un sous-ensemble peut être beaucoup plus grand que le nombre $2^n$ des mots de n bits à coder. Il est alors possible d'introduire des critères supplémentaires de sélection. Par exemple, il est possible d'exclure du sous ensemble initialement déterminé les mots comportant les plus longues suites de bits "1" ou "0". Ainsi le spectre du signal codé comportera moins de basses fréquences et la récupération du signal d'horloge sera facilitée du fait que le nombre de transitions sera aussi grand que possible.

A titre d'exemple, pour le codage de l'information disponible sous forme d'octets ($n = 8$) codés sous forme de mots de 20 bits ($p = 2$), l'application des critères de détermination décrits ci-dessus a conduit, en limitant le nombre de bits "0" ou "1" consécutifs à 6, à un sous-ensemble de 263 mots de 20 bits, ainsi que leurs compléments, utilisables pour coder les 256 octets possibles à l'entrée. Cet exemple de sous-ensemble de mots de 20 bits est donné ci-après. En limitant le nombre de bits "0" ou "1" consécutifs à 8, il est possible de déterminer un sous-ensemble de 340 mots de 20 bits, et leurs compléments. 256 d'entre eux sont choisis, auxquels peut être ajouté un (ou plusieurs) mot particulier enregistré pour la détermination de la synchronisation trame numérique, c'est-à-dire utilisés lors de la restitution pour trouver les débuts de mots codés dans le train binaire restitué. En particulier, l'un des mots présentant le plus grand nombre de transitions peut être réservé à cette fin, par exemple le mot 00 11 00 11 .......11, et son complément.

Le nombre $p$ de bits supplémentaires est le premier entier déterminé à partir du nombre $n$ choisi pour que le nombre de mots possibles répondant aux critères précédents soit supérieur à $2^n$. Ainsi, pour $n = 8$, il n'est pas possible de choisir $p = 1$ car le nombre de mots de $2(n + p) = 18$ bits répondant aux critères précédents est inférieur à 256.

De plus, le critère relatif à l'élimination des bits isolés dans le train binaire série a conduit à prévoir que $2^n$ mots et leurs compléments sont des mots du code, chaque mot initial ayant deux représentations possibles complémentaires, et que le mot de codage serait choisi entre les deux mots complémentaires en fonction de la fin du mot codé précédent lorsque le mot codé commence par un bit isolé, ou en fonction du début du mot codé lorsque le mot codé précédent se termine par un bit isolé.

Du fait que dans le procédé de codage suivant l'invention, $2p$ bits supplémentaires sont ajoutés aux $2n$ bits, indépendemment des critères de sélection, le nombre total de mots de l'alphabet dans lequel le choix doit être effectué est $2^{2(n + p)}$. En fonction des $n$ et $p$ choisis, certains alphabets peuvent permettre de suivre les critères suivants :

- autant de bits "1" que de bits "0" dans chacun des mots du code ;

- aucun bit isolé dans chacun des mots du code ;

- distance minimale égale à 4 entre les mots du code.

Dans ce cas, un mot et son complément sont retenus pour coder deux mots différents et il n'y a pas lieu de prévoir d'inversion de mot comme dans le cas décrit précédemment, mais le critère de distance s'applique alors a l'ensemble des mots du code comportant éventuellement des mots complémentaires. Cette solution ne peut être retenue pour n = 8 et pour p = 2 car le nombre de mots possibles est insuffisant lorsque les mots comportant des bits isolés au début ou à la fin sont exclus.

L'affectation de chacun des mots d'un code établi en suivant le procédé décrit ci-dessus à l'un des $2^n$ mots à coder peut être effectuée d'une manière quelconque, mais elle peut aussi être réalisée pour permettre une détection plus facile des erreurs et éventuellement leur correction en tenant compte de la nature du signal vidéo à coder. Ainsi, des niveaux proches sont codés par exemple par des mots du code à une distance aussi grande que possible les uns des autres. Ainsi du fait de la continuité du signal vidéo, lorsque, lors de la restitution, des erreurs sont détectées, elles peuvent être corrigées en remplaçant le mot erroné par celui des mots voisins permettant de réaliser la continuité dans la séquence restituée. Mais des niveaux proches peuvent aussi être codés par des mots du code aussi proches que possible. Ainsi, lorsqu'une erreur est détectée sur un mot restitué et que les mots du code les plus proches de ce mot restitué sont à égale distance de ce mot, la correction est réalisée en choisissant indifféremment l'un ou l'autre de ces mots du code, l'erreur commise si la correction ne donne pas le mot initialement transmis étant faible.

Le procédé de codage suivant l'invention peut être mis en oeuvre dans un dispositif de codage analogue à celui décrit dans la demande de brevet précitée, adapté en ce qui concerne le contenu des mémoires de transcodage, la longueur des registres et la fréquence des horloges pour transmettre des mots codés de 20 bits au lieu des mots codés de 16.

De même, à la restitution après réception du signal codé transmis à la sortie du canal de transmission, le dispositif de décodage mis en oeuvre peut également être analogue à celui décrit dans la demande de brevet précitée.

Dans un mode de réalisation peu élaboré mais coûteux l'ensemble mémoire de décodage à 20 entrées et 8 sorties peut faire correspondre à chacun des mots restitués le mot initial correspondant, la programmation de cette mémoire morte tenant compte de la correction des erreurs pour les combinaisons de 20 bits qui ne sont pas des mots du code. Il est également

7

possible de ne mettre en mémoire qu'une partie des combinaisons de 20 bits, par exemple celles correspondant effectivement à un mot de code et de faire suivre cet ensemble d'un circuit de traitement qui lorsqu'une erreur est détectée, c'est-à-dire que la combinaison de 20 bits à l'entrée ne correspond à aucun mot du code, recherche à partir du mot reçu et de l'affectation des mots du code aux mots à coder, le mot le plus probablement transmis. Ce traitement peut être réalisé par des circuits en logique câblée ou programmée.

L'exemple annoncé ci-dessus du sous-ensemble de 263 mots de 20 bits comportant chacun 10 bits "0" et 10 bits "1", dans lequel chacun des mots est à une distance au moins égale à 4 de tous les autres mots, chaque mot ne comportant aucun bit isolé sauf éventuellement le premier et ou le dernier, suit :

| | |
|---|---|
| 0 : 00000110001110011111 | 30 : 00001110000111111001 |
| 1 : 00000110001111100111 | 31 : 00001110011001110011 |
| 2 : 00000110011001111110 | 32 : 00001110011100111001 |
| 3 : 00000110011111001110 | 33 : 00001110011110011100 |
| 4 : 00000111000111001111 | 34 : 00001110011111000011 |
| 5 : 00000111000111110011 | 35 : 00001111000011111100 |
| 6 : 00000111001100111110 | 36 : 00001111000111100110 |
| 7 : 00000111100001111110 | 37 : 00001111001100001111 |
| 8 : 00000111100011100111 | 38 : 00001111001100110011 |
| 9 : 00000111100011111001 | 39 : 00001111001110011001 |
| 10 : 00000111100110011110 | 40 : 00001111001111001100 |
| 11 : 00000111110000011111 | 41 : 00001111001111100001 |
| 12 : 00000111110001110011 | 42 : 00001111100110000111 |
| 13 : 00000111110011001110 | 43 : 00001111100111110000 |
| 14 : 00000111111000111001 | 44 : 00001111110000111100 |
| 15 : 00000111111001100110 | 45 : 00001111110011000011 |
| 16 : 00001100001111001111 | 46 : 00011000001110011111 |
| 17 : 00001100001111110011 | 47 : 00011000001111100111 |
| 18 : 00001100011100011111 | 48 : 00011000011001111110 |
| 19 : 00001100011111100110 | 49 : 00011000011111001110 |
| 20 : 00001100110001111110 | 50 : 00011000110011100111 |
| 21 : 00001100110011001111 | 51 : 00011000110011111001 |
| 22 : 00001100110011110011 | 52 : 00011000111000011111 |
| 23 : 00001100111001100111 | 53 : 00011000111001110011 |
| 24 : 00001100111001111001 | 54 : 00011000111100111001 |
| 25 : 00001100111100110011 | 55 : 00011000111110011100 |
| 26 : 00001100111100111100 | 56 : 00011000111111000011 |
| 27 : 00001100111110000111 | 57 : 00011001100001111110 |
| 28 : 00001100111110011001 | 58 : 00011001100011001111 |
| 29 : 00001100111111001100 | 59 : 00011001100011110011 |

0066512

```
 60 : 000110011001100110011110      108 : 00110011000011110011
 61 : 000110011001111100110      109 : 00110011000110011110
 62 : 000110011001111111000      110 : 00110011000111100110
 63 : 000110011110001111100      111 : 00110011000111111000
 64 : 000110011110011100110      112 : 00110011001100001111
 65 : 000110011111100000111      113 : 00110011001100110011
 66 : 000111000011001111110      114 : 00110011001100111100
 67 : 000111000011111100001      115 : 00110011001110011001
 68 : 000111001111000011110      116 : 00110011001111000011
 69 : 000111100000011111110      117 : 00110011001111001100
 70 : 000111100000110011110      118 : 00110011100111100001
 71 : 000111100000111100110      119 : 00110011110000110011
 72 : 000111100001100111100      120 : 00110011110000111100
 73 : 000111100011100001111      121 : 00110011110001100110
 74 : 000111100011111110000      122 : 00110011110011000011
 75 : 000111100110000011110      123 : 00110011110011001100
 76 : 000111100110001111000      124 : 00110011110011110000
 77 : 000111100110011001100      125 : 00110011111000000111
 78 : 000111110000011001111      126 : 00110011111000011001
 79 : 000111110000011110011      127 : 00110011111001100001
 80 : 000111110001110000011      128 : 00110011111100110000
 81 : 000111110011000111000      129 : 00111000000111111001
 82 : 000111111000000011110      130 : 00111001100110011001
 83 : 000111111000000110011      131 : 00111001100111000011
 84 : 000111111000110001100      132 : 00111001100111001100
 85 : 000111111000111100001      133 : 00111001110000111001
 86 : 000111111001100011100      134 : 00111001110001100011
 87 : 001100000011110011110      135 : 00111001110011000110
 88 : 001100000011111100110      136 : 00111001111001110000
 89 : 001100000111000111110      137 : 00111001111100011000
 90 : 001100000111111100110      138 : 00111001111110000001
 91 : 001100001100011111100      139 : 00111100000011100111
 92 : 001100001100110011110      140 : 00111100000011111100
 93 : 001100001100111100110      141 : 00111100000110001111
 94 : 001100001110011001111      142 : 00111100001100110011
 95 : 001100001110011110011      143 : 00111100001110011001
 96 : 001100001111001100110      144 : 00111100001111000011
 97 : 001100001111001111100      145 : 00111100001111001100
 98 : 001100001111100000111      146 : 00111100011000011110
 99 : 001100001111100110011      147 : 00111100011000111001
100 : 001100001111111001100      148 : 00111100011001100011
101 : 001100011000111001111      149 : 00111100011100000111
102 : 001100011000111110011      150 : 00111100110000001111
103 : 001100011001100011110      151 : 00111100110000110011
104 : 001100011100000111110      152 : 00111100110000111100
105 : 001100011111000011110      153 : 00111100110001100110
106 : 001100110000011111110      154 : 00111100110011000011
107 : 001100110000110011110      155 : 00111100110011001100
```

9

```
156 : 00111100110011110000      210 : 01100110000111111000
157 : 00111100111100110000      211 : 01100110001100001111
158 : 00111110000111000110      212 : 01100110001100110011
159 : 00111110000111100001      213 : 01100110001100111100
160 : 00111110001100001110      214 : 01100110001110011001
161 : 00111110001100111000      215 : 01100110001111000011
162 : 00111110011001110000      216 : 01100110001111001100
163 : 00111110011110000001      217 : 01100110011000011110
164 : 00111111000000111100      218 : 01100110011000111001
165 : 00111111000011001100      219 : 01100110011001100011
166 : 00111111000011110000      220 : 01100110011110000110
167 : 00111111000110011000      221 : 01100110011111100000
168 : 00111111001100000011      222 : 01100111100000110011
169 : 01100000011001111110      223 : 01100111100000111100
170 : 01100000011110001111      224 : 01100111100001100110
171 : 01100000011111100011      225 : 01100111100011100001
172 : 01100000110011100111      226 : 01100111100110000110
173 : 01100000110011111001      227 : 01110000001100111110
174 : 01100000111000011111      228 : 01110000111111000001
175 : 01100000111001110011      229 : 01110001110001110001
176 : 01100000111100111001      230 : 01110011100001111000
177 : 01100000111110011100      231 : 01111000000110011110
178 : 01100000111111000110      232 : 01111000000111000111
179 : 01100001100001111110      233 : 01111000001100001111
180 : 01100001100011001111      234 : 01111000001100111001
181 : 01100001100011110011      235 : 01111000001111100001
182 : 01100001100110011110      236 : 01111000011000110011
183 : 01100001100111100110      237 : 01111000011000111100
184 : 01100001100111111000      238 : 01111000011001100110
185 : 01100001111000111100      239 : 01111000011110000011
186 : 01100001111001100110      240 : 01111000011110001100
187 : 01100001111100000111      241 : 01111000110000011110
188 : 01100010000111000111      242 : 01111000110001111000
189 : 01100010000111110011      243 : 01111000110011100001
190 : 01100010001100011111      244 : 01111000111000000111
191 : 01100010011001100111      245 : 01111000111000011001
192 : 01100010011001111001      246 : 01111001100000110011
193 : 01100010011111000110      247 : 01111001100000111100
194 : 01100010011111100001      248 : 01111001100001100110
195 : 01100011100000011111      249 : 01111001100011110000
196 : 01100011100110011001      250 : 01111001100110000110
197 : 01100011100111000011      251 : 01111001111000001100
198 : 01100011100111001100      252 : 01111100000011001110
199 : 01100011110000111001      253 : 01111100000011110001
200 : 01100011110001100011      254 : 01111100001100011100
201 : 01100011110011000110      255 : 01111100001110000110
202 : 01100011111000001110      256 : 01111100111001100000
203 : 01100011111001110000      257 : 01111110000001100011
204 : 01100011111100011000      258 : 01111110000001111000
205 : 01100110000001111110      259 : 01111110000110000011
206 : 01100110000011001111      260 : 01111110000110001100
207 : 01100110000011110011      261 : 01111110011000000110
208 : 01100110000110011110      262 : 01111110011000011000
209 : 01100110000111100110
```

10

## REVENDICATIONS

1. Procédé de codage de données binaires de période T applicable à la transmission de signal vidéo numérisé, dans lequel ces données sont groupées en mots de n bits, n entier, caractérisé en ce qu'il associe à chacun des $2^n$ mots possibles de n bits au moins un mot codé choisi dans un sous-ensemble de $2^n$ mots de $2(n + p)$ bits, p entier, les bits de ces mots ayant une période égale à $\frac{n}{2(n + p)} T$, et les mots de ce sous-ensemble répondant aux critères suivants :

- chaque mot comporte autant de bits "1" que de bits "0",

- aucun bit "1" ou "0" n'apparaît isolé dans un mot sauf éventuellement le premier et/ou le dernier,

- chacun des mots de ce sous-ensemble est à une distance au moins égale à 4 de tous les autres mots ;

et en ce que, n étant donné, p est le plus petit entier tel que parmi les $2^{2(n + p)}$ mots de $2(n + p)$, un sous-ensemble d'au moins $2^n$ mots répondant aux critères est déterminable.

2. Procédé selon la revendication 1, caractérisé en ce que chaque mot du sous-ensemble ne comporte aucun bit isolé, un seul mot codé de $2(n + p)$ bits étant associé à chaque mot à coder de n bits.

3. Procédé selon la revendication 1, caractérisé en ce que, chaque mot du sous-ensemble ne comportant pas de bit isolé sauf éventuellement le premier et/ou le dernier, le sous-ensemble ne comporte que des mots commençant par le même bit, le mot complémentaire de $2(n + p)$ bits étant associé à chaque mot codé du sous-ensemble, le choix entre l'un et l'autre de ces deux mots complémentaires étant réalisé de façon qu'il n'apparaisse aucun bit isolé dans le train binaire résultant du codage.

4. Procédé selon l'une quelconque des revendications précédentes, caractérisé en ce que n et p étant choisis et le sous-ensemble des mots répondant aux critères comportant un nombre de mots possibles supérieur à $2^n$, les mots codés de $2(n + p)$ bits sont choisis dans cet ensemble en écartant les mots présentant les plus longues suites de bits identiques.

5. Procédé selon l'une quelconque des revendications précédentes, caractérisé en ce qu'au moins un mot supplémentaire répondant également aux critères est ajouté au sous-ensemble pour la synchronisation trame numérique.

6. Procédé selon l'une quelconque des revendications, caractérisé en ce que l'affectation des mots codés aux $2^n$ mots à coder est réalisée en tenant compte de la nature de l'information, pour optimiser la détection et la correction des erreurs lors du décodage.

7. Procédé selon la revendication 4, caractérisé en ce que n étant choisi égal à 8 et p égal à 2, le nombre de bits identiques dans les mots codés est limité à 6.

8. Application du procédé de codage selon l'une quelconque des revendications précédentes à un système de transfert de signal vidéofréquence numérisé sur bande magnétique.

Office européen
des brevets

RAPPORT DE RECHERCHE EUROPEENNE

Numero de la demande

EP 82 40 0955

## DOCUMENTS CONSIDERES COMME PERTINENTS

| Categorie | Citation du document avec indication, en cas de besoin, des parties pertinentes | Revendication concernee | CLASSEMENT DE LA DEMANDE (Int Cl. 3) |
|---|---|---|---|
| DA | EP - A - 0 026 699 (THOMSON-CSF)<br><br>* page 5, lignes 21-32; page 6, lignes 18-32; page 8, lignes 7-12 *<br><br>-- | 1-5 | G 11 B 5/09<br>H 04 L 25/49 |
| A | NACHRICHTENTECHNISCHE ZEITSCHRIFT N.T.Z., vol. 27, no. 6, juin 1974 BERLIN (DE)<br>M. CAFLISCH et al.: "Leistungsspektren von Blockcodes", pages 219-224.<br><br>* page 222, colonne de gauche, lignes 36-42; page 222, colonne de droite, ligne 4 - page 223, colonne de droite, dernier alinéa *<br><br>-- | 1,2,5, 6 | |
| A | US - A - 2 552 629 (HAMMING)<br><br>* colonne 11, lignes 41-64 *<br><br>------ | 1 | DOMAINES TECHNIQUES RECHERCHES (Int Cl 3)<br><br>G 11 B 5/09<br>H 04 L 25/49 |

Le present rapport de recherche a ete etabli pour toutes les revendications

| Lieu de la recherche | Date d'achevement de la recherche | Examinateur |
|---|---|---|
| LA HAYE | 14-07-1982 | GEISLER |